# EUROPEAN PATENT APPLICATION

(11) **EP 3 073 090 A1**
(43) Date of publication of application: **28.09.2016**
(21) Application number: 15160394.1
(22) Date of filing: 23.03.2015
(51) Int. Cl.: F02B 31/06, F02B 31/08

(54) **ADAPTING INTAKE FLOW FOR INTERNAL COMBUSTION ENGINES**

(71) Applicant: Caterpillar Motoren GmbH & Co. KG, 24159 Kiel (DE)
(72) Inventor: Sixel, Eike Joachim, 24109 Kiel (DE); Holst, Hauke, 24161 Altenholz (DE)
(74) Representative: Kramer Barske Schmidtchen Patentanwälte PartG mbB

(57) **Abstract**

An intake channel system (40, 40') of an internal combustion engine (1) with an engine block cylinder unit section (3) comprises an intake channel (13) that provides a fluid passage fluidly connecting an inlet side (14A) with an outlet side (14B) for passing an intake fluid to the engine block cylinder unit section (3). The intake channel system (40, 40') comprises further at least one swirl generating element (41, 45A, 45B, 55A, 55B) provided in the intake channel (13), to deflect the flow of the fluid for introducing a swirl (S) onto the intake fluid. Enforcing a swirl in the intake channel system (40, 40') may allow providing a specific flow system within the main combustion chamber.

## Description

### Technical Field

The present disclosure generally relates to an internal combustion engine, and more particularly, to a flow dynamic adjusted internal combustion engine with a pre-(combustion) and main-(combustion) chamber, and a related method for operating an internal combustion engine.

### Background

Internal combustion engines can emit harmful oxides of nitrogen ("NOx") during operation. Those oxides form when nitrogen and oxygen, both of which are present in the charge air used for combustion, react within the main combustion chamber. Typically, the level of NOx formed increases as the peak combustion temperatures within the combustion chambers increase. As such, minimizing the peak combustion temperatures within the main combustion chamber generally reduces the emission of NOx. Leaner charge air-gaseous fuel mixtures may reduce the peak combustion temperatures in the main combustion chamber, thus may reduce the amount of harmful NOx emitted.

Although a lean charge air-gaseous fuel mixture may - due to its relatively large air-to-fuel ratio when compared to a gas mixture having a stoichiometric air-to-fuel ratio by using more air in the mixture - advantageously lower NOx emissions, it also may result in an incomplete combustion within the main combustion chamber and a poor ignitability of the charge air-gaseous fuel mixture.

Pre-combustion chamber systems may be used to minimize the occurrence of incomplete combustion. In general, a pre-combustion chamber is in fluid communication with the main combustion chamber of the internal combustion engine via small flow transfer passages. Ignition of the fuel within the pre-combustion chamber creates a flame front of burning fuel that is jetted through the flow transfer passages into the main combustion chamber, where respective ignition jets ignite the lean charge air-gaseous fuel mixture within the main combustion chamber.

Although the flame front of burning ignition jets may generally be sufficient to cause complete combustion of the lean charge air-gaseous fuel mixture within the main combustion chamber, in general the enriched pre-chambers itself may produce a large amount of NOx-emissions caused by the stoichiometric or under stoichiometric combustion within the pre-combustion chamber.

The present disclosure is directed, at least in part, to improving or overcoming one or more aspects of prior systems.

### Summary of the Disclosure

In one aspect of the present disclosure, an intake channel system of an internal combustion engine with an engine block cylinder unit section comprises an intake channel that provides a fluid passage fluidly connecting an inlet side with an outlet side for passing an intake fluid to the engine block cylinder unit section. The intake channel system comprises further at least one swirl generating element provided in the intake channel, to deflect the flow of the fluid for introducing a swirl (S) onto the intake fluid.

In another aspect, a cylinder head for covering a main combustion chamber of an internal combustion engine comprises such an intake channel system.

In another aspect, an internal combustion engine for operation on at least partly gaseous fuel under adjusted flow dynamics comprises an engine block cylinder unit section providing a main combustion chamber, and a cylinder head with such an intake channel that is configured for providing a charge air-gaseous fuel mixture through an intake opening into the main combustion chamber, thereby generating a flow system of the charge air-gaseous fuel mixture within the main combustion chamber. The cylinder head covers the main combustion chamber and comprises an ignition source for igniting the charge air-gaseous fuel mixture within the main combustion chamber.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic drawing of a section of an internal combustion engine, specifically of a section of the engine block covered by a cylinder head with a pre-combustion chamber assembly;
Fig. 2 is a schematic top view into the main combustion chamber of an internal combustion engine for illustrating the flow dynamics;
Fig. 3 is a schematic illustration of a section of the charge air system including two intake valves;
Fig. 4 is an axial view of a swirl generating section of a valve stem-valve head unit;
Fig. 5 is a 3D-view of the valve stem-valve head unit of Fig. 4;
Figs. 6 and 7 show exemplary cross sections for an intake channel system for valve stem based enforcing of a swirl;
Figs. 8 and 9 show exemplary cross sections for an intake channel system for intake channel based enforcing of a swirl; and
Fig. 10 illustrates schematically a tiltable swirl generating element.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that a flow of charge air-gaseous fuel mixture within the main combustion chamber may be provided by a specific directionality when charging the main combustion chamber, e.g. by supplying the mixture with a tangential component (e.g. swirl-like). For example, one may enforce a specific flow due to some flow enforcing structure within the intake channel. Moreover, it was realized that a flow of the charge air-gaseous fuel mixture may be provided by enforcing a specific flow behavior within the intake channel, for example, by providing, at a valve stem of the intake valve and/or at a wall of the intake channel, a specific swirl section with at least one swirl generating element. Specifically, such rotor-like elements may be provided and, e.g., the valve stem may be stabilized or counter rotated with respect to the enforced swirl, for example by a rotation and stabilization unit. Moreover, it was realized that combining two or more inlet valves with respective flow enforcing may be used to enforce a swirl within the main combustion chamber. However, the present disclosure should not be considered to be limited to the described flow enforcing technology for e.g. creating the rotational flow (swirl) in the main combustion chamber. The person skilled in the art may realize that other technologies may allow generating desired flows as well.

The present disclosure is further based in part on the realization that - when igniting a lean charge air-gaseous fuel mixture in a main chamber by ignition jets - in particular the quality of the ignition process is based on the contact-zone provided for the ignition jets and the lean charge air-gaseous fuel mixture and the turbulence level in those contact-zones. It was further realized that in particular the amount of ignited lean charge air-gaseous fuel mixture depends on the ignition jet penetration and the relative velocity between the ignition jets and the lean charge air-gaseous fuel mixture.

The present disclosure is further based in part on the realization that, to further reduce NOx-emission, the energy combusted within the pre-combustion chamber may be further decreased, while the same ignition performance is maintained. It was further realized that the latter may be achieved by increasing the relative velocity between the ignition jets and the lean charge air-gaseous fuel mixture and by that the turbulence level in the respective contact-zone.

The present disclosure is further based in part on the realization that one may align the relative flows between the ignition jets and the charge air-gaseous fuel mixture to maintain a sufficient ignition process/sufficient ignition jet penetration.

The ignition jets may be given by the ignition process parameters as well as the design of the pre-combustion chamber including the design of the flow transfer passages.

The flow system of the charge air-gaseous fuel mixture within a cylinder may comprise three types: a swirl flow and a tumble flow, or a flow field with rotation between swirl and tumble. For all types, rotational motion occurs about an axis of rotation. However, the position and orientation of the respective axis of rotation is different. For a swirl flow, the axis usually is aligned with the cylinder axis, i.e. may be more or less coincident with the cylinder axis or shifted with respect to the cylinder axis. For a tumble flow, the axis is essentially tilted with respect to the cylinder axis, e.g. perpendicular to the cylinder axis and may even be more complex such as bend or circular. Flow systems may comprise swirl flows and/or tumble flows.

In general, the formation of a respective flow system (swirl flow and/or tumble flow) may depend on the velocity of the piston when reciprocating, incl. the engine speed and stroke amplitude, the diameter and shape of the main combustion chamber e.g. the shape of piston and cylinder head, the pressure of the charge air, the timing of the valve openings including valve opening overlap between intake and exhaust valves, and the shape and directionality of the intake and/or exhaust channels.

To increase the relative velocity between the lean mixture and the jets, a flow of the charge air-gaseous fuel mixture may be provided and additionally the direction of the flows (i.e. of the ignition jets and the lean charge air-gaseous fuel mixture) may be directed at least partially against each other. For example, in the region of the overlap of the charge-air gaseous fuel mixture with one of the ignition jets, a flow of the charge air-gaseous fuel mixture may comprise a flow (vector) component that is directed against the direction of the ignition jet, thereby being directed at least partially against the ignition jet. Accordingly, the vector associated with the ignition jet and the vector associated with flow direction of the charge air-gaseous fuel mixture, when overlapping with the ignition jet understood as a respective counter flow section, extend under an angle of at least 90° (180° corresponding to being directed against each other, i.e. flows in opposite directions). For example, the vector associated with an injection direction of the ignition jet and the vector associated with the charge air-gaseous fuel mixture may extend under an angle of at least 120°, at least 135°, at least 150°, or at least 170°. In particular, the counter-flow as described above may be given for at least 50% or at least 70%,or at least 85% of the extent of the ignition jet.

For example, the direction of the ignition jet-flow may be influenced by the angle of the pre-chamber flow transfer passages, while the flow of the lean charge air-gaseous fuel mixture in the main chamber may be forced into a swirl in a manner that this flow runs against the flow of the ignition jets. Then, more lean charge air-gaseous fuel mixture may get in contact with the ignition jets and may be ignited even, for example, with leaner conditions in the pre-combustion chamber. Thus, for example, less amount of ignition energy may be needed for ignition and the mixture in the pre-combustion chamber can be made leaner. Leaner mixture in the pre-combustion chamber may lead to colder combustion temperatures and, therefore, to lower NOx-emissions.

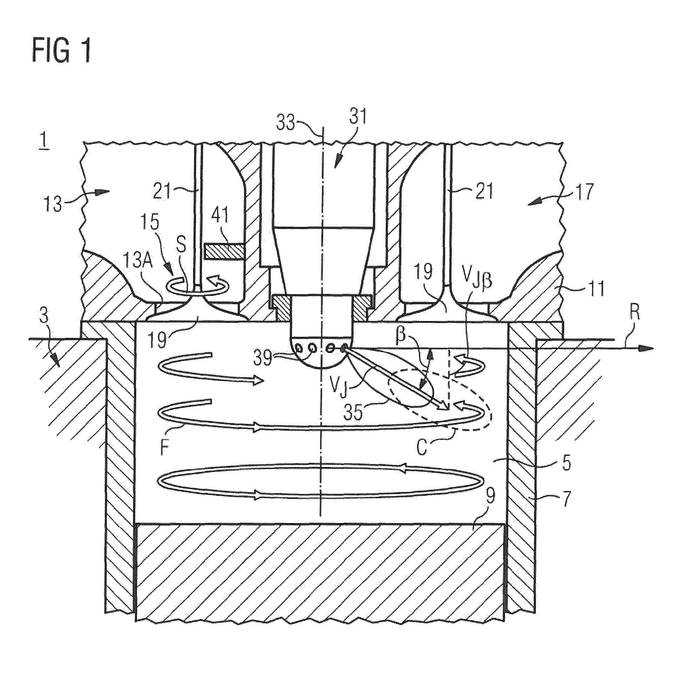

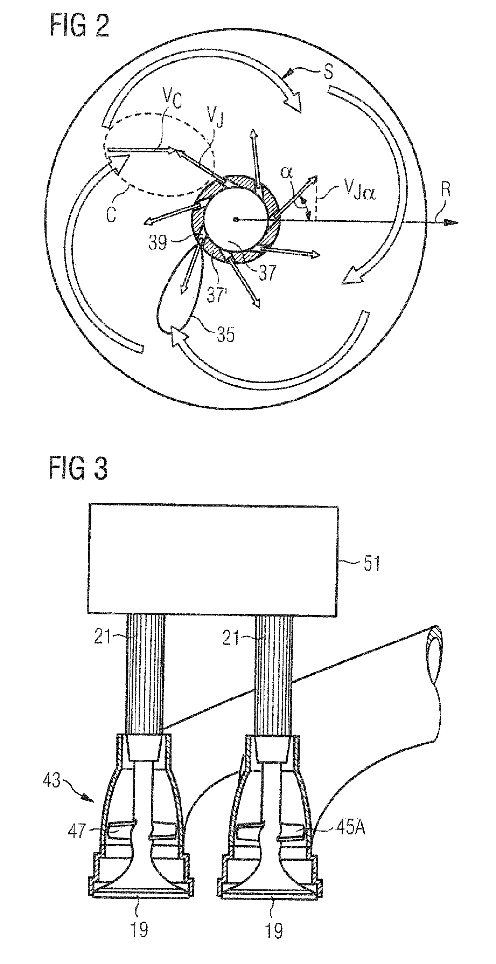

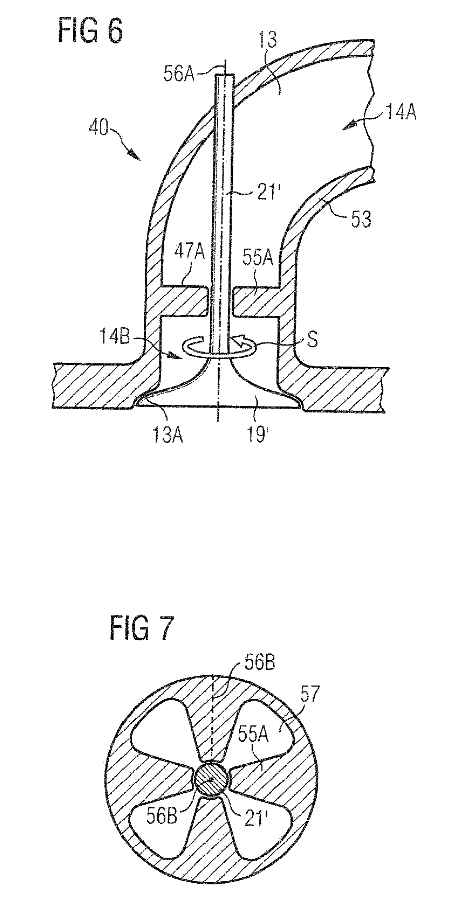

With reference to the drawings 1 to 10, the general concepts of the present disclosure are explained. In particular, the proposed counter-flow concept is explained in connection with Figs. 1 and 2 and exemplary configurations for enforcing a swirl within the main combustion chamber is disclosed in combination with Figs. 3 to 5 (valve stem based) and Figs. 6 to 10 (intake channel based).

Fig. 1 shows schematically a cylinder unit section for an internal combustion engine 1 that is operable at least partly on gaseous fuel and provides adjusted flow dynamics. Engine 1 includes, for example, one or more engine block cylinder unit sections 3, each providing a main combustion chamber 5. Main combustion chamber 5 is, for example, radially delimited by a cylinder liner 7 and axially delimited by a piston 9 and a cylinder head 11. Accordingly, cylinder head 11 covers main combustion chamber 5.

During operation of engine 1, piston 9 reciprocates in engine block cylinder unit section 3, thereby moving between a top dead center and a bottom dead center. For the purposes of the present disclosure, the internal combustion engine 1 is considered as a four-stroke internal combustion engine operating at least partly on gaseous fuel such as a gas engine or a dual fuel engine. One skilled in the art will recognize, however, that the internal combustion engine may be any type of engine that would utilize a pre-chamber assembly as disclosed herein. For example, the internal combustion engine may be a medium speed gas engine of the series GCM34 manufactured by Caterpillar Motoren GmbH & Co. KG.

Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

As further shown in Fig. 1, cylinder head 11 comprises inter alia one or more intake channels 13 for providing the charge air-gaseous fuel mixture through an intake opening 13A into main combustion chamber 5, wherein that fluid connection is controllable via an intake valve configuration 15.

Cylinder head 11 further comprises one or more exhaust valve configurations 17 fluidly connecting main combustion chamber 5 with an exhaust gas system (not shown) via respective outlet openings.

As it is known in the art, respective intake valve configurations 15 and exhaust valve configurations 17 are each formed by a valve disk 19 connected to a valve stem 21 and are operated, for example, by rocker arm configurations. Specifically, valve disks 19 are configured to close intake opening 13A (or a respective exhaust opening) by forming a seal with a sealing face provided by cylinder head 11 (or in some embodiments, a valve sealing ring mounted to cylinder head 11).

Cylinder head 11 further comprises one or more pre-combustion chamber assemblies 31, for example positioned along a central axis 33 of main combustion chamber 5. Pre-combustion chamber assembly 31 is configured for igniting the charge air-gaseous fuel mixture within main combustion chamber 5. Specifically, the ignition is based on ignition jets 35 that are generated by a combustion initiated within a pre-combustion chamber 37 of pre-combustion chamber assembly 31 (see also Fig. 2). In general, pre-combustion chamber 37 is delimited by a pre-combustion chamber wall 37' from main combustion chamber 5. Pre-combustion chamber wall 37' comprises a series of flow transfer passages 39 through which a burning gaseous fuel air mixture, which was ignited within pre-combustion chamber 37, is released into main combustion chamber 5.

For example, pre-combustion chamber assembly 31 may provide several ignition jets 35 azimuthally distributed around central axis 33, wherein each ignition jet may extend up to the wall of main combustion chamber 5, e.g. over about 1% to 100 % of the radius of main combustion chamber such as at least 50 %.

As shown in Fig. 1 and Fig. 2, ignition jets 35 may not extend exactly in radial direction but under an inclination with respect to a radial direction R. Specifically, the inclination may be characterized by a first (azimuthal) inclination angle α that is defined within a plane orthogonal to central axis 33 and a (not required) second (elevation) inclination angle β defined within a plane along central axis 33.

For example, assuming that each ignition jet 35 has a (main) injection direction V_{J}, that injection direction V_{J} comprises an azimuthal inclination component V_{Jα} with respect to a respective radial direction R associated with an origin position of ignition jet 35.

To provide such an inclined extension of ignition jets 35 into main combustion chamber 5, flow transfer passages 39 may be inclined with respect to the radial direction R similar to the ignition jets in an azimuthal direction as well as in an elevation direction. For example, a central axis of the respective passage 39 may be inclined by the (azimuthal) angle α with respect to the respective radial direction associated with respective passage 39. The origin position of an ignition jet 35 and/or the radial direction of the through hole may be, for example, associated with an outlet side of the respective passage 39.

In addition, there may be second (elevation) inclination angle β with respect to the plane along central axis 33 by which ignition jets 35 are directed towards piston 9. Accordingly, ignition jets 35 reach into main combustion chamber 5. Thus, main injection direction V_{J} comprises an elevation inclination component V_{Jβ} with respect to a respective radial direction R.

For example, first (azimuthal) inclination angle α may be in the range of 5° to 85° such as around 45° and second (elevation) angle β may be in the range from 0° to 110° such as around 30°.

In some embodiments, all of ignition jets 35 (as well as for example all flow transfer passages 39) may be inclined by the same azimuthal angle α and/or the same elevation angle β with respect to a respective radial direction. In some embodiments, the azimuthal angel α and/or β of a respective ignition jet 35 (and for example a respective flow transfer passages 39) may be adapted to a specific flow direction V_{F} of a respective counter flow section C described below.

Moreover, the flow transfer passages will not need to have the same orientation. They could start in different layers and end in different layers. Furthermore, the distribution of flow transfer passages 39 could be asymmetrical with respect to pre-combustion chamber 37.

With respect to the angles defined above, the radial direction may be defined by radial vector R extending from central axis 33 through an outlet side of the respective flow transfer passages towards the cylinder liner 7 in a radial manner. Similarly, the origin position of an ignition jet 35 may be that outlet side of the respective flow transfer passage.

For the concept of aligned flow dynamics, in addition to the flow dynamic of ignition jets 35, a specific flow of the charge air-gaseous fuel mixture within combustion chamber 5 may be enforced. For example, the specific structure of intake channel 13 may enforce a swirl of the charge air-gaseous fuel mixture when passing through intake opening 13A. For example, the directionality of provided charge air-gaseous fuel mixture may be inclined accordingly (e.g. may have a tangential component).

An additional or alternative flow enforcement may be performed via a swirl section provided at a valve stem with at least one swirl generating element as disclosed below in connection with Figs. 3 to 5.

In addition or alternatively, a swirl generating element 41 (schematically indicated in Fig. 1) may be provided, for example close to intake opening 13A, as disclosed below in connection with Figs. 6 to 10.

In general, internal combustion engine 1 is based on a structure/structural configuration provided in particular in the intake path of the charge air-gaseous fuel mixture configured such that a flow system F of the charge air-gaseous fuel mixture forms within main combustion chamber 5.

For example, a single swirl is formed that provides a flow around central axis 33 of main combustion chamber 5. Accordingly, the charge air-gaseous fuel mixture flows along the side wall of main combustion chamber 5 in azimuthal direction as indicated in Fig. 1 by a "3D-like" indicated arrow (i.e. extending in and out of the plan of drawing) and in Fig. 2 by a sequence of arrows. It is noted, that the arrows are for illustration purposes only and illustrate that flow system F (exemplarily essentially a swirl system) comprises counter flow sections C that at least partly overlap with respective ignition jets 35. Counter flow sections C are defined by a flow direction V_{F} that is essentially directed against a respective injection direction V_{J} of the associated ignition jet 35. Accordingly, ignition jets 35 are confronted with a counter flow situation and reach a larger volume of charge air-gaseous fuel mixture for igniting the gaseous fuel-charge air mixture in a more complete manner as it would occur without a counter flow configuration.

As in general the ignited volume depends on the formation of the ignition jets and the velocity V_{S} of the counter flow section C, adapting the direction of ignition jets 35 to face the counter flow within the counter flow sections may improve the ignition.

Simulations and/or measurements of the flow system and, thus, a swirl system and/or a tumble system within the main combustion chamber may be performed based on specific parameters selected for a specific internal combustion engine. Accordingly, the extent and velocity distribution of the swirl within main combustion chamber 5 may be determined during the planning phase and set accordingly such that, including a respective adjustment of the flow transfer passages and respective ignition jet formation, the hereby disclosed counter flow concept is realized in the internal combustion engine.

In the following, embodiments are disclosed that may support formation of flow system F based on respective structure(s) provided at valve stem 21 and/or within intake channel 13.

In some embodiments of a pre-set swirl generation, providing a respective structure(s) provided at valve stem 21 and/or intake channel 13 may allow further adjustment of the swirl generation during operation, for example, by rotating valve stem 21 such as increasing or reducing the swirl generation.

A pre-set swirl generation may improve the combustion, for example, in lean burning Otto engines as the charge motion before ignition can be increased and specifically adapted, e.g. by imposing one or more swirls and or tumbles. This may be achieved by a special shaped valve stem that introduces swirl generating elements configured, for example, as radially extending rotor blades. The surface of those rotor blades may be tilted around a respective radial axis extending radially from valve stem, thereby, for example, enforcing a specific spinning flow around valve stem 21 upstream of intake opening 13A. That spinning flow from one or more intake valves may expand into main combustion chamber 5 and may impose one or more swirls or tumbles.

In Fig. 3, an exemplary configuration of such a structure and system for enforcing the formation of flow system F within main combustion chamber 5 is shown. A pair of intake channels 13 is provided with each intake valve configuration being based on respectively modified valve stems 21 for holding respective valve disks 19.

Specifically, valve stem 21 includes a swirl generation section 43. Swirl generation section 43 may be positioned close to the transition between valve stem 21 and valve disk 19, thereby affecting the flow within intake channel 13 close to intake opening 13A.

Swirl generation section 43 includes one or more swirl generating elements. In the embodiment of Fig. 3, two swirl generating elements 45A extend radially from the axis of valve stem 21 into intake channel 13 in opposite directions. Swirl generating elements 45A may be configured exemplarily as radially extending rotor blades that may have surface sections 47 being tilted around a respective radial axis extending radially from valve stem 21, thereby, for example, enforcing a specific spinning flow around valve stem 21 upstream of intake opening 13A.

Furthermore, as shown in Fig. 3, a rotation unit 51 for rotating valve stem 21 and, thereby, for influencing the formation of flow system F. In particular, rotation unit 51 is configured and controllable for aligning flow direction V_{F} of a respective counter flow section F with the respective injection directions V_{J} of the respective ignition jet 35. For example, rotation unit 51 may be used to optimize the respective angular orientation prior operation and/or may continuously adapt the same, for example, in line with applicable intake valve opening times and/or intake air pressures.

In some embodiments, rotation unit 51 may allow (for example continuously during operation) rotating valve stem 21 against the spinning direction generated by the valve stem's swirl generating elements 45A within intake channel 13 downstream of swirl generating section 43. Furthermore, for example changing the rotation direction and rotation velocity applied by the rotation unit 51 to valve stem 21, the swirls and/or tumbles may be increased or decreased and thereby adapted to the current operation mode of the engine.

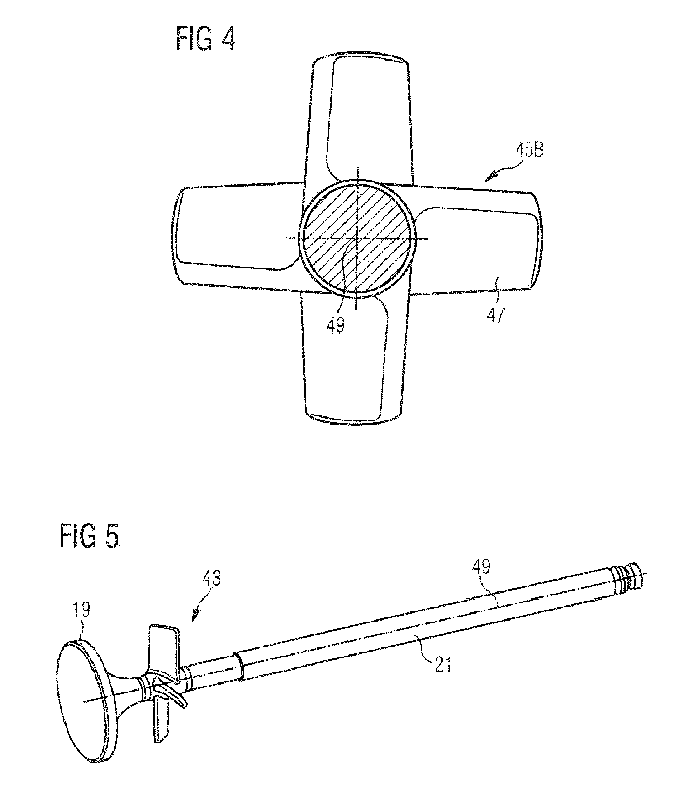

While in Fig. 3 swirl generating elements 45A are shown, Fig. 4 shows a further exemplary embodiment in a cut view through swirl generation section 43 and Fig. 5 shows the respective valve stem 21 with swirl generation section 43 and valve disk 19 in a three-dimensional view. As can be seen in those figures, swirl generation section 43 comprises exemplarily four swirl generating elements 45B equally distributed around a valve stem axis 49. In general, one or more swirl generating elements 45B may be provided.

In connection with Figs. 6 to 10, embodiments are disclosed that use swirl generating elements not mounted to the valve stem but instead being mounted to the wall of the intake channel.

Fig. 6 shows a cross-section of an intake channel system 40 for an internal combustion engine as shown, for example, in Fig. 1. In particular, intake channel system 40 comprises intake channel 13 and swirl generating elements 55A. The cross-section extends along a center axis 56A of intake channel 13 in the area of swirl generating elements 55A. In the exemplary embodiment, also a valve stem 21' extends along that center axis 56A.

Fig. 6 shows a cross section of an intake channel system 40 that is orthogonal to center axis 56A and cuts through swirl generating elements 55A.

In general, intake channel system 40 comprises a channel wall 53 delimiting intake channel 13. For example, channel wall 53 is integrated into a casted part such as a casted cylinder head or may be provided as an intake pipe.

Intake channel 13 provides a fluid passage fluidly connecting an inlet side 14A with an outlet side 14B of intake channel 13. Intake channel 13 is configured for passing an intake fluid such as an intake air gaseous fuel mixture to the engine block cylinder unit section. For example, outlet side 14B is fluidly connected to intake opening 13A to guide the intake fluid to main combustion chamber 5. Opening 13A may be closed by a valve disk 19' of valve stem 21' during operation of the engine.

As shown in Fig. 6 and Fig. 7, channel wall 53 comprises swirl generating elements 55A, which extend into intake channel 13 from four sides. As shown also in Fig. 7, swirl generating element 55A may in particular extend radially inward towards valve stem 21'. Exemplarily, a radial direction 56B with respect to center axis 56A of intake channel 13 at the region of swirl generating elements 55A is indicated in Fig. 7.

Swirl generating elements 55A comprise a surface section 47A facing against the through flow direction of the fluid. At least one surface section 47A maybe tilted around respective radial direction 56B. Moreover, surface section 47A and in particular the complete shape of swirl generating elements 55A may be selected to affect a desired swirl S within intake channel 13 downstream of swirl generating elements 55A.

As shown in Fig. 7, four swirl generating elements 55A may be arranged symmetrically around valve stem 21', thereby providing four essentially triangular shaped through-flow sections 57.

Charge air-gaseous fuel mixture passing along intake channel 13 will be partially deflected by surface sections 47A and pass through through-flow sections 57 thereby enforcing swirl S. The axis of rotation may usually coincide with center axis 56A of intake channel 13.

Swirl S will pass intake opening 13A and form flow system F such as a swirl system or tumble system within combustion chamber 5.

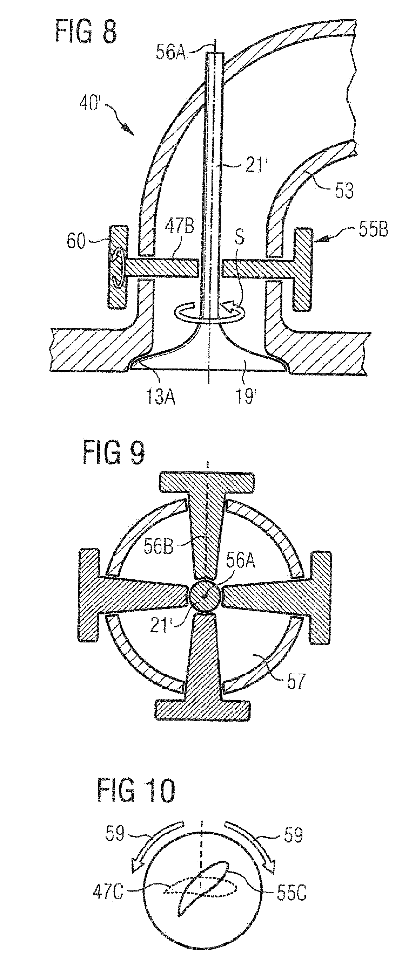

Figs. 8 and 9 show a further embodiment of an intake channel system 40' that provides more flexibility with respect to the generation of swirl S. Specifically, swirl S may be modified by changing the orientation of swirl generating elements 55B during the operation of the engine. Figs. 8 and 9 correspond to a cross section as shown in Figs. 6 and 7. Respective reference numerals are maintained were feasible.

In particular, swirl generating elements 55B are configured as separate elements that reach through channel wall 53 of intake channel 13. Accordingly, swirl generating elements comprise a portion within intake channel 13 providing again surface sections 47B. Swirl generating elements 55B are mounted in tiltable manner to channel wall 53 such that the tilt of surface section 47B can be adjusted by rotation of swirl generating element 55B. For example, swirl generating elements 55B may comprise portions that are positioned outside of channel wall 53 and that are configured to be rotatable by a tilt unit 60, exemplarily indicated in Fig. 8 for one swirl generating element 55B.

Accordingly, the orientation of swirl generating element 55B and, thus, surface sections 47B may be adjusted by varying the tilt angle. Thereby, the deflection of any flow of charge air-gaseous fuel mixture into through-flow sections 57may be modified and the extent and rotation speed of swirl S downstream of swirl generating elements 55B may be adjusted, for example in dependence of the operation mode.

Fig. 10 further illustrates that a swirl generating element 55C may be tilted as indicated by arrows 59 and the two position in through lines and dotted lines. Moreover, the cross-section of swirl-generating element 55C is indicated to have a profile to specifically affect a smooth deflection of charge air-gaseous fuel mixture, and thus a specific generation of swirl S.

In general, a rotation of swirl generating elements 55B, 55C may be achieved by one or more rotation units configured to individually or commonly adapt the tilt angle of surface sections 47B, 47C around radial direction 56B with respect to center axis 56A of intake channel 13.

### Industrial Applicability

The herein disclosed counter-flow configurations may allow operation of an internal combustion engine with ignition jets 35 being directed against the swirl direction, thereby increasing the turbulence level and the ignited volume within main combustion chamber 5. Furthermore, the herein disclosed concepts may allow adapting the flow system F during operation to adjust the same.

The above description of a pre-chamber Otto-Gas engine is exemplary only. The described arrangement could also be applied to a Diesel-Gas engine like a Micro-Pilot (Diesel) ignited Otto engine, or a Diesel ignited Dual-Fuel engine with one or two fluid injection systems. The ignition jets will then be formed by the burning Diesel sprays, in particular extending through the charge air-gaseous fuel mixture within the main combustion chamber. The above discussed configurations of the transfer passages as well as the formation and orientation of the ignition jets will be equally applicable to these types of engines such as injector based engines using, for example, similar transfer passages fluidly connecting a chamber within the injector tip with the main combustion chamber.

With respect to the configurations of the swirl generating elements disclosed herein, in some configurations, an uneven distribution of swirl generating elements may be provided. The uneven distribution or shape may affect, for example, the passing charge air-gaseous fuel mixture asymmetrically with respect to intake opening, thereby creating an asymmetric passing of the charge air-gaseous fuel mixture by the valve disk.

In contrast to valve stems using rotor blades to move the valve stem during each opening so that the valve disk does not adhere to the cylinder head, the swirl generating elements as disclosed herein are configured to form a swirl covering essentially complete intake channel 13. For example, the swirl generating elements may extend at least over 50 % of the radius or may even essentially extend almost up to the wall of intake channel (e.g. up to 98 % of the radius intake channel 13 - assuming a circular intake channels).

Although the preferred embodiments of this invention have been described herein, improvements and modifications may be incorporated without departing from the scope of the following claims.

## Claims

1. An intake channel system (40, 40') of an internal combustion engine (1) with an engine block cylinder unit section (3), the intake channel system (40, 40') comprising:
an intake channel (13) providing a fluid passage fluidly connecting an inlet side (14A) with an outlet side (14B) for passing an intake fluid to the engine block cylinder unit section (3); and
at least one swirl generating element (41, 45A, 45B, 55A, 55B) provided in the intake channel (13), to deflect the flow of the fluid for introducing a swirl (S) onto the intake fluid.

2. The intake channel system (40, 40') of claim 1, wherein the swirl generating element (45A, 45B) comprises a surface section (47) being tiltable around a radial direction (56B) with respect to a center axis (56A) of the intake channel (13).

3. The intake channel system (40, 40') according to claim 2, further comprising
a tilt unit (60) for changing the tilt angle of the surface section (47B, 47C).

4. The intake channel system (40, 40') according to any one of claim 1 to claim 3, further comprising a channel wall delimiting the intake channel (13) and in particular integrated in a casted part or provided by an intake pipe, and
the channel wall comprises the swirl generating element (41, 55A) extending, in particular radially inward, into the intake channel (13) or
the swirl generating element (41, 55B) is, in particular tiltably, mounted to the channel wall.

5. The intake channel system (40, 40') according to any one of claim 1 to claim 4, further comprising:
a valve stem (21,21') having a valve disk (19, 19') at an end to form an intake valve system (15) together with an intake opening (13A) of the engine block cylinder unit section (3), wherein the valve stem (21,21') comprises the swirl generating element (43A, 43B) extending, in particular radially outward, into the intake channel (13).

6. The intake channel system (40, 40') according to claim 5, further comprising
a rotation unit (51) for rotating the valve stem (21, 21') for influencing the formation of the swirl (S) with respect to the outlet side (14B).

7. A cylinder head (11) for covering a main combustion chamber (5) of an internal combustion engine (1), the cylinder head (11) comprising
an intake channel system (40, 40') according to any one of the preceding claims.

8. An internal combustion engine (1) for operation on at least partly gaseous fuel under adjusted flow dynamics, the engine (1) comprising:
an engine block cylinder unit section (3) providing a main combustion chamber (5); and
a cylinder head (11) according to claim 7, wherein the intake channel (13) of the cylinder head (11) is configured for providing a charge air-gaseous fuel mixture through an intake opening (13A) into the main combustion chamber (5), thereby generating a flow system (F) of the charge air-gaseous fuel mixture within the main combustion chamber (5), the cylinder head (11) covering the main combustion chamber (5) and comprising an ignition source (31) for igniting the charge air-gaseous fuel mixture within the main combustion chamber (5).

9. The internal combustion engine (1) according to claim 8, wherein the ignition source (31) is configured for providing ignition jets (35) of burning charge air-gaseous fuel mixture, or of burning charge air-gaseous fuel mixture in combination with burning Diesel sprays into the main combustion chamber (5) along injection directions (V_{J}), and the flow system (F) includes at least one counter flow section (C) that at least partly spatially overlaps with a respective one of the ignition jets (35) and has a flow direction (V_{F}) directed at least partially against the respective injection direction (V_{J}).

10. The internal combustion engine (1) according to claim 8 or claim 9, wherein
the flow system (F) comprises a single swirl, for example providing a flow around the central axis (33) of the main combustion chamber (5), or multiple swirls, for example providing a flow around multiple axes at least one being displaced from the central axis (33) of the main combustion chamber (5), and/or one or more tumbles in the main combustion chamber (5).

11. The internal combustion engine (1) according to any of the preceding claims, wherein
at least one of the injection directions (V_{J}) comprises an inclination component with respect to a respective radial direction (R) associated with an origin position of the ignition jet (35), and, in particular,
wherein the ignition source (31) comprises a chamber (37) such as pre-combustion chamber in case the ignition source is configured as a pre-combustion chamber assembly, or a fuel chamber in a nozzle in case the ignition source is configured as a liquid fuel injector, wherein the chamber (37) is surrounded by a wall structure (37') with a plurality of flow transfer passages (39) formed in the wall structure (37') to fluidly connect the chamber (37) with the main combustion chamber (5), and
a central axis of at least one of the flow transfer passages (39) is inclined by an azimuthal inclination angle (α) with respect to the radial direction (R) associated with respective the flow transfer passage (39) and/or
the origin position of an ignition jet (35) and/or the central axis of the flow transfer passage (39) is associated with an outlet side of the respective flow transfer passage (39).

12. The internal combustion engine (1) according to any of the preceding claims, further configured as a gaseous fuel operated engine with a pre-chamber, or pre-chamber spark plug (as part of the ignition source) or as a Diesel-Gas engine operable with liquid fuel and/or gaseous fuel such as a liquid fuel ignited open chamber dual fuel engine with one or more fuel injectors (as part of the ignition source), or a micro-pilot injection ignited pre-chamber Diesel-Gas or dual fuel engine.

13. A method for introducing a flow system (F) of a fluid into a main combustion chamber (5), the method comprising
guiding a fluid along an intake channel system (40, 40') of any one of claim 1 to claim 6 towards an intake opening (13A) of the combustion chamber (5), thereby enforcing a swirl (S) onto the fluid in the intake channel (13) by deflecting the fluid by the at least one swirl generating element (41, 45A, 45B, 55A, 55B); and
releasing the fluid through an intake opening (13A) into the main combustion chamber (5) to generate the flow system (F) therein.
